Europäisches Patentamt

European Patent Office

Office européen des brevets

(11) Veröffentlichungsnummer : **0 110 152**
**B1**

(12) # EUROPÄISCHE PATENTSCHRIFT

(45) Veröffentlichungstag der Patentschrift :
27.07.88

(51) Int. Cl.⁴ : **G 01 H   9/00, G 10 D   1/08**

(21) Anmeldenummer : 83110786.7

(22) Anmeldetag : 28.10.83

(54) **Abtastsystem für Schwingungen von Materie.**

(30) Priorität : 25.11.82 DE 3243563

(43) Veröffentlichungstag der Anmeldung :
13.06.84 Patentblatt 84/24

(45) Bekanntmachung des Hinweises auf die Patenterteilung : 27.07.88 Patentblatt 88/30

(84) Benannte Vertragsstaaten :
AT CH DE LI

(56) Entgegenhaltungen :
DE-A- 2 440 624
US-A- 3 733 953
US-A- 4 295 473
FREQUENZ, Band 37, Nr. 1, Januar 1983; Seiten 12-
15, Berlin, DE; E. HOJAN et al.: "Methode zur experimentellen Bestimmung der Vibrationsverteilung an
Membranen elektroakustischer Wandler"

(73) Patentinhaber : **Kromberg & Schubert**
**Spitzenstrasse 37**
**D-5600 Wuppertal 22 (DE)**

(72) Erfinder : **Siebeneiker, Günter**
**Burgstrasse 24a**
**D-5802 Wetter (DE)**
Erfinder : **Brunn, Hartmut**
**Hohe Egge Unterweg 33**
**D-4322 Sprockhövel (DE)**
Erfinder : **Steiger, Uwe**
**Bebbelsdorf 32**
**D-5810 Witten/Ruhr (DE)**

(74) Vertreter : **Mentzel, Norbert, Dipl.-Phys.**
**Patentanwälte Dipl.-Phys. Buse Dipl.-Phys. Mentzel**
**Dipl.-Ing. Ludewig Unterdörnen 114**
**D-5600 Wuppertal 2 (DE)**

# Beschreibung

Die Erfindung betrifft ein Abtastsystem für Schwingungen von Materie und zur Umwandlung von mechanischen Schwingungen der Materie, insbesondere der Saiten von Musikinstrumenten, wie Gitarren, Harfen, Klaviere od. dgl., in eine entsprechend den mechanischen Schwingungen der Materie pulsierende elektrische Spannung, mit einem Wandler, der die von einer Strahlungsquelle kommenden Strahlen in elektrische Spannung umsetzt, wobei die schwingende Materie mit einem Teil in das auf den Wandler auftreffende Strahlenbündel angeordnet ist und auf den Wandler entsprechend schwingende Abschattungen bewirkt.

Bei diesem aus der US-PS 37 33 953 bekannten Abtastsystem werden die Schwingungen der Saiten einer Gitarre mit Strahlenbündeln abgetastet. Jeder Saite ist dabei eine eigene Strahlungsquelle und ein eigener Wandler zugeordnet. Den 6 Saiten der Gitarre sind somit 6 Strahlungsquellen und 6 Wandler zugeordnet. Der Abstand zwischen der Strahlungsquelle und dem zugehörigen Wandler einer jeden Saite der Gitarre ist dabei kleiner als der gegenseitige Abstand zwischen den einzelnen Saiten der Gitarre, so daß insbesondere bei der dicksten Saite der Gitarre der von dieser Saite im Strahlungsbündel gebildete Kernschatten auf den Wandler fällt, so daß dieser in der Null-Lage der dicksten Saitennaht so vollständig abgeschattet ist. Die Fläche des Wandlers ist dabei so klein ausgebildet, so daß beim Schwingen dieser dicksten Saite die durch die dickste Saite hervorgerufene Abschattung bei der größten Ausschwingung vollständig neben dem Wandler liegt. Es muß somit unterstellt werden, daß beim Gegenstand dieser Entgegenhaltung beim Schwingen der Saiten die Saiten den Wandler abschatten und durch die seitliche Schwingung freigegeben und somit eine pulsierende Spannung im Wandler entsprechend der Schwingung der Saite erzeugen. Bei diesem Abtastsystem sind somit pro schwingender Materie eine eigene Strahlungsquelle und ein eigener Wandler erforderlich, wodurch die Abtastung teurer und verwickelter wird. Dabei kann in jedem Strahlenbündel lediglich eine schwingende Materie angeordnet werden.

Der Erfindung liegt die Aufgabe zu Grunde, ein Abtastsystem der eingangs erläuterten Art zu schaffen, bei dem solche Nachteile vermieden sind und in einem Strahlenbündel hintereinanderliegend mehrere schwingende Materien angeordnet und abgetastet werden können.

Diese Aufgabe ist erfindungsgemäß dadurch gelöst, daß in dem auf den Wandler auftreffenden Strahlenbündeln mehrere, in Längsrichtung des Strahlenbündels hintereinander angeordnete, unabhängig voneinander schwingbare Materien angeordnet sind, die sich überlappende Abschattungen am gemeinsamen Wandler verursachen, wobei die schwingbaren Materien mit jeweils einem schlanken, die Breite des Strahlenbündels unterschreitenden Teil im Strahlenbündel angeordnet sind und der vom Strahlenbündel aktivierbare und von den im Strahlenbündel angeordneten Teilen der schwingenden Materien partiell abgeschattete Teil des Wandlers eine solche Gestalt aufweist, daß bei einer durch die Schwingungen hervorgerufenen seitlichen Verschiebung der Abschattungen der abgeschattete und der nicht abgeschattete Teil der aktivierbaren Fläche des Wandler sich in der Größe ändern.

Dadurch wird in einfacher Weise erreicht, daß die unabhängig voneinander im Strahlenbündel hintereinander angeordneten schwingenden Materien sich überlagernde Abschattungen bilden, die entsprechend pulsierende Spannungen im Wandler hervorrufen. Da die schwingenden Materien mit schlanken, die Breite des Strahlenbündels unterschreitenden Teilen im Strahlenbündel angeordnet sind, wird auch bei einer Schwingung der Materien in Längsrichtung des Strahlenbündels der entsprechende auf den Wandler auftreffende Schatten schmaler und breiter, so daß auch diese Schwingungen abtastbar sind. Bei Schwingungen der Materien rechtwinklig zur Längsrichtung des Strahlenbündels, tritt jeweils eine seitliche Verschiebung der Abschattungen auf, so daß auch diese Schwingungen zuverlässig abgetastet werden können. Der vom Strahlenbündel aktivierbare und von dem im Strahlenbündel angeordneten Teil der schwingenden Materie partiell abgeschattete Teil des Wandler weist dabei eine solche Gestalt auf, daß bei der durch die Schwingungen hervorgerufenen seitlichen Verschiebung des Schattens der abgeschattete und nicht abgeschattete Teil der aktivierbaren Fläche sich in der Größe ändern und somit Spannungsänderungen im Wandler bewirken.

Die vom Strahlenbündel aktivierbare Fläche des Wandlers kann eine kreisrunde Gestalt aufweisen. Dadurch wird in einfacher Weise erreicht, daß bei einer schwingungsbedingten seitlichen Verschiebung des Schattens auf der aktivierbaren Fläche des Wandlers der Schatten in den abgerundeten Teil der Fläche gelangt und somit kleiner wird, so daß der Anteil der aktivierbaren Fläche des Wandlers, der nicht vom Schatten erfaßt ist, größer wird. Durch die seitliche Verschiebung des Schattens auf der aktivierbaren Fläche des Wandlers tritt somit in einfacher Weise ebenfalls eine Schwankung der Spannung ein.

Das auf die aktivierbare Fläche des Wandlers auftreffende Strahlenbündel kann einen kreisrunden Querschnitt aufweisen. Hierdurch wird ebenfalls in einfacher Weise erreicht, daß seitliche Schwingungen des Körpers Wandlungen der Spannung im Wandler hervorrufen, da bei einer seitlichen Verschiebung des schwingenden Körpers in einem kreisrunden Querschnitt aufweisenden Strahlenbündel einen kleineren Teil des Strahlenbündels abdeckt, so daß der neben dem schwingenden Körper durchgehende Anteil des Strahlenbündels größer wird und somit die Änderung der Spannung im Wandler bewirkt.

Zwischen dem Wandler und der schwingenden Materie kann eine das Strahlungsbündel auf eine kleinere Querschnittsfläche bringende Vorrichtung, vorzugsweise in Form einer Sammellinse, vorgesehen sein. Dadurch kann in einfacher Weise der Wandler eine verhältnismäßig kleine Bescheinfläche aufweisen, während das von der Bestrahlungsquelle kommende und auf den Wandler auftreffende Strahlungsbündel im Bereich der schwingenden Materie oder Materien eine wesentliche größere Querschnittsfläche aufweist. Hinzu kommt auch noch, daß eine solche Sammellinse einen kreisrunden äußeren Umriß aufweist und somit dem auf den Wandler auftreffenden Strahlenbündel einen kreisrunden Querschnitt verleiht.

Ebenso kann auch zwischen dem Wandler und der schwingenden Materie eine das Strahlungsbündel auf eine größere Querschnittsfläche bringende Vorrichtung, vorzugsweise in Form einer Zerstreuungslinse, vorgesehen sein. Dadurch kann in einfacher Weise auch mit einem dünnen Strahl eine Abtastung an einer mit einer sehr kleinen Amplitude schwingenden Materie vorgenommen werden. Dabei wird das Strahlungsbündel auf eine größere Querschnittsfläche gebracht und somit die Schwingung der Schatten auf dem Wandler vergrößert.

Zwischen dem Wandler und der die Querschnittsfläche des Strahlungsbündels verändernden Vorrichtung kann ein Strahlungsleiter, vorzugsweise in Form einer biegsamen Lichtleitfaser, geschaltet sein. Dadurch wird in einfacher Weise erreicht, daß der Wandler nicht unmittelbar hinter der die Querschnittsfläche des Strahlungsbündels verändernden Vorrichtung angeordnet werden muß. Die mit der die Querschnittsfläche des Strahlungsbündels verändernden Vorrichtung zusammengefaßte Strahlung kann durch eine Lichtleitfaser ohne Störanfälligkeit durch elektromagnetische Felder zum Wandler geführt werden.

Die vom Wandler kommende elektrische Spannung kann über einen Umwandler zu einem Nutzsignal aufbereitbar sein. Ein solches Nutzsignal kann der entsprechende Impuls zu einem pneumatischen oder beweglichen Stellglied od. dgl. sein.

Die vom Wandler kommende elektrische Spannung kann über einen Verstärker zu einem elektrischen Nutzsignal, vorzugsweise in Form eines Musiksignals, aufbereitet werden. Die vom Wandler kommende Spannung wird somit über einen Verstärker einem Lautsprecher zugeführt, so daß die hörbaren Schwingungen von fester Materie, z.B. einer Saite eines Musikinstruments, verstärkt aus dem Lautsprecher kommen.

Die vom Wandler kommende elektrische Spannung kann über einen Verstärker zu mindestens einem Lautsprecher geführt sein. Hörbare Tonschwingungen von Saiten einer Gitarre einer Harfe, eines Klaviers od. dgl. werden somit in einfacher und zuverlässiger Weise verstärkt.

Bei der Abtastung der Tonschwingungen von Saiten einer Gitarre, Harfe, Klavier od. dgl., kann das Strahlungsbündel rechtwinklig auf die Saiten treffen, wobei die Saiten im Strahlungsbündel hintereinanderliegend angeordnet sind. Dadurch werden in einfacher Weise von dem Strahlungsbündel alle hintereinanderliegenden Saiten der Gitarre, Harfe, Klavier od. dgl. erfaßt.

Die Strahlungsquelle kann von einer Lichtquelle mit einer Glühlampe gebildet sein. Die als Strahlungsquelle dienende Lichtquelle wird somit in einfacher Weise von einer Glühlampe gebildet. Durch Einschalten der Glühlampe kann somit in einfacher Weise das erforderliche Strahlungsbündel in Form eines Lichtbündels geschaffen werden.

Die die Lichtquelle bildende Glühlampe kann zur Justierung des Strahlungsbündels symmetrisch auf die hintereinanderliegenden Saiten begrenzt verstellbar sein. Dadurch kann in einfacher Weise das Strahlungsbündel justiert werden, so daß die hintereinanderliegenden Saiten symmetrisch im Strahlungsbündel angeordnet sind.

Dem von der Lichtquelle kommenden und zur Sammellinse führenden und dabei die Saiten der Gitarre, Harfe, Klavier od. dgl. erfassenden Lichtbündel kann eine etwa U-förmige Abdeckung mit Aussparungen für die Saiten zugeordnet sein. Dadurch wird in einfacher Weise das Lichtbündel und insbesondere die Sammellinse mit dem anschließenden Wandler gegen Fremdlicht geschützt, so daß Fremdlichteinflüsse keine Störungen hervorrufen können.

Auf der Zeichnung ist die Erfindung in einem Ausführungsbeispiel dargestellt, und zwar zeigen :

Fig. 1 eine Gitarre mit dem erfindungsgemäßen Abtastsystem in Draufsicht,

Fig. 2 einen Schnitt nach der Linie II-II der Fig. 1 in einem größeren Maßstab,

Fig. 3 die von einer Lichtquelle gebildete Strahlungsquelle mit dem auf eine Sammellinse auftreffenden Strahlungsbündel in schematischer Darstellung, wobei im Strahlungsbündel die Saiten der Gitarre angeordnet sind,

Fig. 4 die Sammellinse in Vorderansicht mit dem teilweise abgeschatteten Strahlungsbündel,

Fig. 5 eine der Fig. 3 entsprechende Darstellung, wobei jedoch zwei der Gitarrensaiten in Stellungen dargestellt sind, die beim Schwingen der Saiten quer zum Strahlungsbündel eingenommen werden,

Fig. 6 die Sammellinse in Vorderansicht mit dem zugehörigen, teilweise abgeschatteten Strahlungsbündel,

Fig. 7 eine der Fig. 3 entsprechende Darstellung, wobei jedoch zwei der Saiten in Stellungen dargestellt sind, die beim Schwingen der Saiten parallel zum Strahlungsbündel eingenommen werden,

Fig. 8 die Sammellinse in Vorderansicht mit dem zugehörigen, teilweise abgeschatteten Strahlungsbündel,

Fig. 9 eine der Fig. 3 entsprechende Darstellung, wobei jedoch zwei der Saiten in Stellungen dargestellt sind, die beim Schwingen der Saiten parallel zum Strahlungsbündel eingenommen werden und

Fig. 10 die zugehörige Sammellinse in Vorderansicht mit dem entsprechend Fig. 9 teilweise abgeschatteten Strahlungsbündel.

Das erfindungsgemäße Abtastsystem ist beim dargestellten Ausführungsbeispiel an einer Gitarre 20 dargestellt. Die Gitarre 20 besteht dabei aus dem Gitarrenkörper 21 und dem Hals 22, auf dem das Griffbrett vorgesehen ist. Die sich über dem Hals 22 erstreckenden Saiten 23, 24, 25, 26, 27 und 28 sind am Gitarrenkörper 21 mit nicht näher dargestellten Querriegeln befestigt. Das Stimmen der Saiten 23 bis 28 erfolgt mit Schraubenwirbeln 29. Mit dem erfindungsgemäßen Abtastsystem werden die Schwingungen der Saiten 23 bis 28, die hörbar sind, abgestastet und verstärkt hörbar gemacht.

Das Abtastsystem besteht aus dabei aus einer Strahlungsquelle, in Form einer Lichtquelle 30, die von einer Glühlampe 31 gebildet ist. Die Glühlampe 31 wird von einer Batterie 32 gespeist, die in einer Aussparung 33 in der Unterseite des Gitarrenkörpers 21 vorgesehen ist. Die Stromzuführung in der Batterie 32 zu der Glühlampe 31 erfolgt dabei über einen Schalter 34, mit dem die Glühlampe 31 ein- und ausschaltbar ist.

Mit der von der Lichtquelle 30 gebildeten Strahlungsquelle wird ein Strahlungsbündel in Form eines Lichtbündels 35 erzeugt, das auf eine Sammellinse 36 auftrifft. Die Saiten 23 bis 28 sind dabei in dem von der Lichtquelle kommenden und auf die Sammellinse 36 auftreffenden Lichtbündel 35 angeordnet, wobei das Lichtbündel 35 rechtwinklig zu den Saiten 23 bis 28 verläuft. Die Saiten 23 bis 28 sind dabei hintereinanderliegend in diesem Lichtbündel 35 angeordnet. Durch die Anordnung der Saiten 23 bis 28 im Lichtbündel 35 bilden sich Schatten, die auf die Sammellinse 36 fallen. Da die Saiten 23 bis 28 hintereinanderliegend im Lichtbündel 35 vorgesehen sind, überlagern sich die Schatten der einzelnen Saiten 23 bis 28.

Beim bestimmungsgemäßen Gebrauch der Gitarre 20 werden eine oder mehrere der Saiten 23 bis 28 zum Schwingen gebracht, wodurch auch in gleicher Weise mit der gleichen Frequenz die zugehörigen Schatten auf der Sammellinse 36 schwingen und dabei jeweils mehr oder weniger Licht zur Sammellinse 36 durchlassen.

Mit der Sammellinse 36 wird das mit Abschattungen versehene Lichtbündel 35 auf eine kleinere Querschnittsfläche gebracht und in einen Lichtleiter 37 eingeleitet. Der Lichtleiter besteht dabei aus einer biegsamen Lichtleitfaser, mit der das von der Sammellinse 36 kommende Licht einem das Licht in elektrische Spannung umsetzenden Wandler 38 zugeführt wird. Natürlich ist es auch möglich, das von der Sammellinse 36 kommende Licht unmittelbar auf den Wandler 38 auftreffen zu lassen. In diesem Falle müssen jedoch die im Wandler 38 entstehenden kleinen Spannungen über elektrische Leitungen einem nicht näher dargestellten Verstärker zugeführt werden, wobei in der elektrischen Leitungen durch elektromagnetische Felder Störungen verursacht werden können. Bei der Benutzung des Lichtleiters ist eine nahezu störungsfreie Weiterleitung des von der Sammellinse 36 kommenden Lichtes möglich, so daß der Wandler 38 in unmittelbarer Nähe des Verstärkers angeordnet werden kann. Die vom Wandler 38 kommende elektrische Spannung, die sehr klein ist, kann somit ohne lange, störungsanfällige Leitungen durchlaufen zu müssen, unmittelbar einem nicht näher dargestellten Verstärker zugeführt werden. In dem nicht näher dargestellten Verstärker kann die vom Wandler 38 kommende Spannung verstärkt und an einen oder mehrere nicht näher dargestellte Lautsprecher weitergegeben werden, so daß im Lautsprecher Töne erzeugt werden, die den Tonschwingungen der entsprechenden Saiten 23 bis 28 entsprechen.

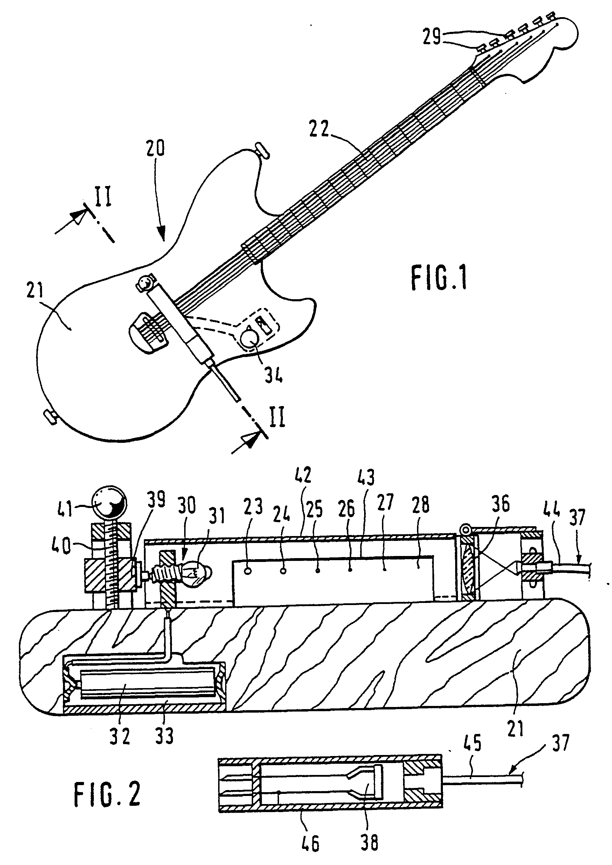

Wie insbesondere aus der Fig. 2 ersichtlich, ist die Glühlampe 31 an einem Halter 39 befestigt, der auf ein Verstellgewinde 40 aufgesetzt ist. Durch Drehen des Verstellgewindes 40 mit der Betätigungshandhabe 41 ist die Glühlampe 31 in der Höhe verstellbar, so daß eine Justierung des Lichtbündels 35 symmetrisch auf die hintereinanderliegenden Saiten 23 bis 28 möglich ist.

Dem von der Lichtquelle kommenden und zur Sammellinse 36 führenden und dabei die Saiten 23 bis 28 der Gitarre 20 erfassenden Lichtbündel 35 ist eine etwa U-förmige Abdeckung 42 zugeordnet, die Aussparungen 43 für Saiten 23 bis 28 aufweist. Mit dieser Abdeckung 42 werden Lichteinflüsse von außen vermieden, die auf die Sammellinse 36 auftreffen und Störungen hervorrufen können.

Der Einfachheit halber sind in der Fig. 2 von dem Lichtleiter 37 lediglich die beiden Enden 44 und 45 dargestellt. Das vordere Ende 44 des Lichtleiters 37 endet dabei unmittelbar hinter der Sammellinse 36, während das hintere Ende 45 an einem Stecker 46 vorgesehen ist, in dem Wandler 38 vorgesehen ist. Mit dem Stecker 46 kann somit der Lichtleiter 37 unmittelbar an dem nicht näher dargestellten Verstärker angeschlossen werden.

Wie bereits erwähnt, ist das erfindungsgemäße Abtastsystem beispielsweise für eine elektrische Verstärkung der Töne von Gitarrensaiten vorgesehen. Die Gitarrensaiten 23 bis 28 sind dabei hintereinanderliegend in dem von der Lichtquelle 30 kommenden Lichtbündel 35 vorgesehen, so daß die sich im Lichtbündel 35 bildenden Abschattungen der hintereinanderliegenden Gitarrensaiten 23 bis 28 sich überlappen. In überraschender Weise hat sich gezeigt, daß die sich überlappenden Abschattungen im Lichtbündel 35 ausreichen, um im Wandler entsprechende pulsierende Spannungen zu erzeugen, die verstärkt auf die Lautsprecher gegeben, klare und reine Töne der einzelnen Gitarrensaiten 23 bis 28 wiedergeben.

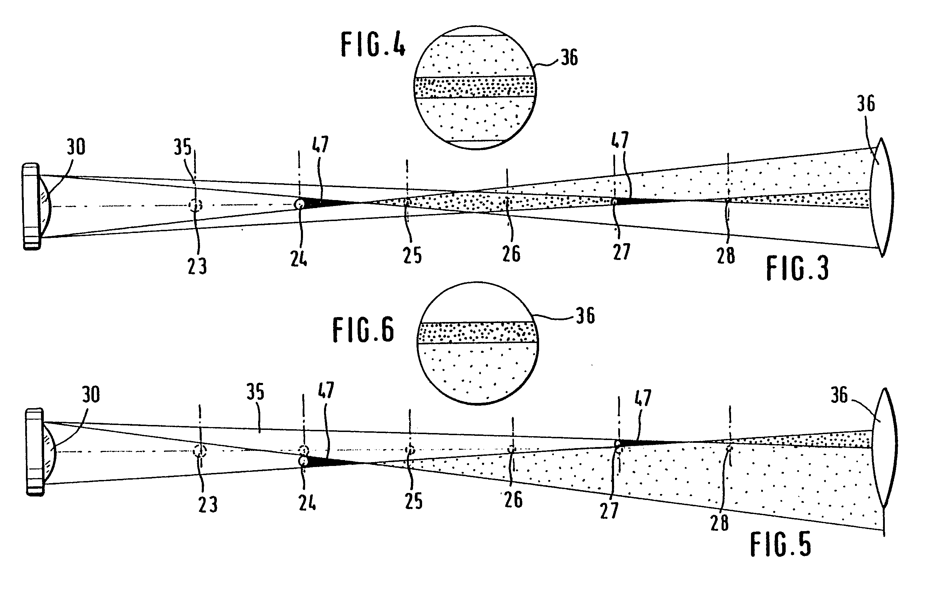

Der Grund hierfür könnte sein, daß jede einzelne Gitarrensaite 23 bis 28 eine eigene Abschattung bildet. In der Fig. 3 und 4 ist dies mit Bezug auf die Saiten 24 und 27 erläutert. Unmittelbar hinter der Gitarrensaite 24 entsteht ein Kernschatten, den kein Licht von der Lichtquelle 30 gelangen kann. Der Kernschatten 47 ist jedoch verhältnismäßig kurz, so daß er nicht bis zur Sammellinse 36 gelangt. Neben und hinter dem Kernschatten 47 bilden sich jedoch Bereiche mit Halbschatten, d. h. diese Bereiche werden nicht mit der vollen Fläche der Lichtquelle 30 beschienen. Je mehr Halbschatten der Saiten 23 bis 28 sich überlagern, desto dunkler dürften diese Bereiche beim Auffallen auf die Sammellinse 36 sein. Der Fig. 4 ist zu entnehmen, daß auf der Sammellinse 36 sich in der Mitte ein waagerecht verlaufender dunkler Streifen bildet, der von den sich überlagernden Halbschatten der hintereinanderliegenden Gitarrensaiten 24 und 27 gebildet ist. Die Schatten der Gitarrensaiten 23, 25, 26 und 28 sind dabei in dieser Zeichnung nicht berücksichtigt. Über und unter diesem dunklen, waagerechten Streifen bilden sich weitere Streifen, die etwas heller sind und von den Halbschatten gebildet werden.

In der Fig. 5 ist die Saite 24 in einer Stellung dargestellt, in der sie beim Schwingen der Saite nach unten aus der Grundstellung wegbewegt ist. Die Saite 27 ist in der Stellung dargestellt, in der sie gegenüber der Grundstellung nach oben bewegt ist. Die Abschattungen bilden dadurch auf der Sammellinse 36 ein anderes Bild, so daß andere Helligkeitswerte auf der Sammellinse 36 ankommen, wodurch im Wandler 38 durch die größere Helligkeit mehr Spannung erzeugt wird. Im Wandler 38 wird mehr Spannung erzeugt, wenn mehr Licht einfällt und es wird weniger Spannung erzeugt, wenn weniger Licht einfällt. Diese unterschiedlichen Spannungswerte entsprechen in der Frequenz genau der Frequenz der Schwingungen der zugehörigen Saiten, so daß die Schwingungen der Saiten ein entsprechendes Pulsieren der Spannung hervorrufen.

Aus den Fig. 4 und 6 ist ersichtlich, daß durch das Schwingen der Saiten 24 und 27 quer zur Längsrichtung des Lichtbündels der auf der Sammellinse 36 auftreffende dunkle Streifen seitlich verschoben ist. Ohne daß die Breite des dunklen Streifens sich verändern muß, entstehen dadurch im Wandler unterschiedlich hohe Spannungen, da bei nicht schwingender Saite 24 oder 27 der dunkle Streifen mittig auf die runde Sammellinse fällt, während durch die zur Seite bewegte Saite 24 oder 27 der dunkle Streifen außermittig auf die runde Sammellinse 36 fällt. Der in der Fig. 6 dargestellte dunkle Streifen deckt weniger von der Gesamtfläche der Sammellinse 36 ab, als ein gleich breiter dunkler Streifen, der mittig auf die runde Sammellinse fällt. Der dunkle Streifen kommt, je weiter er von der Mitte entfernt ist, weiter in den abgerundeten Bereich der runden Sammellinse 36 und wird dadurch kürzer.

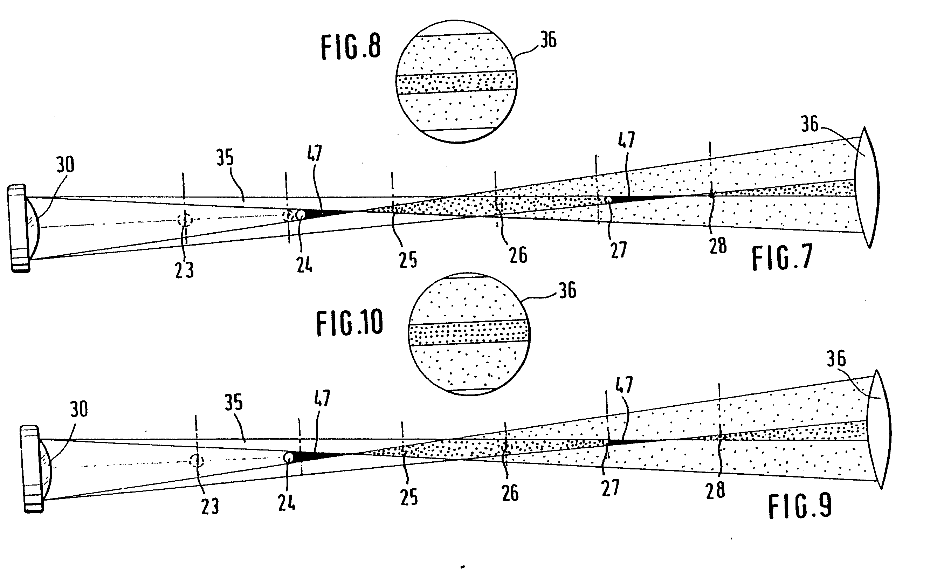

Das erfindungsgemäße Abtastsystem wird auch nicht dadurch beeinträchtigt, wenn die Saiten 23 bis 28 der Gitarre nicht immer rechtwinklig zum Lichtbündel 35, sondern auch ganz oder teilweise in Längsrichtung des Lichtbündel 35 schwingen. Dies ist in den Fig. 7 bis 10 näher dargestellt. In der Fig. 7 sind die Saiten 24 und 27 in den Stellungen beim Schwingen dargestellt, in der der Abstand zwischen den Saiten 24 und 27 gegenüber der Lichtquelle 30 vergrößert ist. In der Fig. 9 sind die Saiten 24 und 27 in den Stellungen dargestellt, in denen der Abstand zwischen den Saiten 24 und 27 gegenüber der Lichtquelle 30 verkleinert ist. Auch bei diesem Schwingen der Saiten 24 und 27 parallel zur Längserstreckung des Lichtbündels 35 ergeben sich unterschiedliche Abschattungen, die auch gegenüber der in der Fig. 3 dargestellten Grundstellung unterschiedlich sind. Die unterschiedlichen Abschattungen der Darstellungen in Fig. 3, Fig. 7 und Fig. 9 rufen unterschiedliche Spannungen im Wandler 38 hervor, so daß eine einwandfreie Verstärkung der Tonschwingungen gewährleistet ist. Aus der Fig. 8 ist ersichtlich, daß der dunkle Streifen schmaler ist, als der in der Fig. 4 dargestellte dunkle Streifen. Dies ist darauf zurückzuführen, daß die Saiten 24 und 27 weiter von der Lichtquelle 30 entfernt sind. Der in der Fig. 10 dargestellte dunkle Streifen ist breiter als der in der Fig. 4 dargestellte dunkle Streifen, da in diesem Fall die Saiten 24 und 27 näher an der Lichtquelle 30 liegen.

Wie bereits erwähnt, ist die dargestellte Ausführung lediglich eine beispielsweise Verwirklichung der Erfindung und diese nicht darauf beschränkt. Vielmehr sind noch mancherlei andere Ausführungen und Anwendungen möglich. So könnte das erfindungsgemäße Abtastsystem zur Verstärkung der Tonschwingungen auch bei anderen Saiteninstrumenten, wie Harfe, Klavier od. dgl., angewandt werden. Außerdem kann das von einer Lichtquelle kommende Lichtbündel auch durch ein anderes Strahlungsbündel ersetzt werden. Das Strahlungsbündel kann somit auch durch infrarotes oder ultraviolettes Licht ersetzt sein, so daß es für das Auge unsichtbar ist. Darüber hinaus sind auch Laserstrahlen, Röntgenstrahlen od. dgl. denkbar. Die Abtastung ist dabei nicht auf feste Materien, wie Saiten von Musikinstrumenten beschränkt. Gasförmige und flüssige Materien können auch abgetastet werden, sofern durch diese Materien Abschattungen gebildet werden. Für die Abtastung von Schwingungen mit sehr kleiner Amplitude kann das Strahlungsbündel von einem dünnen Strahl gebildet werden. Zur Verdeutlichung der Schwingung kann dabei das entsprechend der Schwingung abgeschattete Strahlungsbündel auf eine Zerstreuungslinse fallen, um die Bescheinfläche zu vergrößern. Das erfindungsgemäße Abtastsystem kann auch zum Abtasten anderer mechanischer Schwingungen benutzt werden, die nicht als Tonschwingungen hörbar sind. In diesem Falle können die Schwingungen der Materie und die dadurch entstehenden, pulsierenden Spannungen als Nutzsignale Verwendung finden, die in anderer Weise z. B. als Frequenzmesser, Amplitudenmesser od. dgl. Verwendung finden.

**Patentansprüche**

1. Abtastsystem für Schwingungen von Materie (23-28) und zur Umwandlung von mechanischen Schwingungen der Materie (23-28), insbesondere der Saiten von Musikinstrumenten, wie Gitarren (20), Harfen, Klaviere od. dgl., in eine entsprechend den mechanischen Schwingungen der Materie (23-28) pulsierende elektrische Spannung, mit einem Wandler (38), der die von einer Strahlungsquelle (30) kommenden Strahlen in elektrische Spannung umsetzt, wobei die schwingende Materie (23-28) mit einem Teil in das auf den Wandler (38) auftreffende Strahlenbündel (35) angeordnet ist und auf den Wandler (38) entsprechend schwingende Abschattungen bewirkt, dadurch gekennzeichnet, daß in dem auf den Wandler (38) auftreffenden Strahlenbündel (35) mehrere, in Längsrichtung des Strahlenbündels (35) hintereinander angeordnete, unabhängig voneinander schwingbare Materien (23-28) angeordnet sind, die sich überlappende Abschattungen am gemeinsamen Wandler (38) verursachen, wobei die schwingbaren Materien (23-28) mit jeweils einem schlanken, die Breite des Strahlenbündels (35) unterschreitenden Teil im Strahlenbündel (35) angeordnet sind und der vom Strahlenbündel (35) aktivierbarer und von den im Strahlenbündel (35) angeordneten Teilen der schwingenden Materien (23-28) partiell abgeschattete Teil des Wandlers (38) eine solche Gestalt aufweist, daß bei einer durch die Schwingungen hervorgerufenen seitlichen Verschiebung der Abschattungen der abgeschattete und der nicht abgeschattete Teil der aktivierbaren Fläche des Wandlers (38) sich in der Größe ändern.

2. Abtastsystem nach Anspruch 1, dadurch gekennzeichnet, daß die vom Strahlenbündel (35) aktivierbare Fläche des Wandlers (38) eine kreisrunde Gestalt aufweist.

3. Abtastsystem nach Anspruch 1, dadurch gekennzeichnet, daß das auf die aktivierbare Fläche des Wandlers (38) auftreffende Strahlenbündel (35) einen kreisrunden Querschnitt aufweist.

4. Abtastsystem nach einem der Ansprüche 1 bis 3, dadurch gekennzeichnet, daß zwischen dem Wandler (38) und der schwingenden Materie (23-28) eine, das Strahlenbündel (35) auf eine kleinere Querschnittsfläche bringende Vorrichtung, vorzugsweise in Form einer Sammellinse (36) vorgesehen ist.

5. Abtastsystem nach einem der Ansprüche 1 bis 3, dadurch gekennzeichnet, daß zwischen dem Wandler (38) und der schwingenden Materie (23-28) eine, das Strahlenbündel (35) auf eine größere Querschnittsfläche bringende Vorrichtung, vorzugsweise in Form einer Zerstreuungslinse vorgesehen ist.

6. Abtastsystem nach einem der Ansprüche 1 bis 5, dadurch gekennzeichnet, daß zwischen dem Wandler (38) und der die Querschnittsfläche des Strahlenbündels (35) verändernden Vorrichtung (36) ein Strahlungsleiter (37), vorzugsweise in Form einer biegsamen Lichtleitfaser (37) geschaltet ist.

7. Abtastsystem nach einem der Ansprüche 1 bis 6, dadurch gekennzeichnet, daß die vom Wandler (38) kommende elektrische Spannung über einen Umwandler zu einem Nutzsignal aufbereitbar ist.

8. Abtastsystem nach einem der Ansprüche 1 bis 7, dadurch gekennzeichnet, daß die vom Wandler (38) kommende elektrische Spannung über einen Verstärker zu einem elektrischen Nutzsignal, vorzugsweise in Form eines Musiksignales aufbereitbar ist.

9. Abtastsystem nach einem der Ansprüche 1 bis 8, dadurch gekennzeichnet, daß die vom Wandler (38) kommende elektrische Spannung über einen Verstärker zu mindestens einem Lautsprecher führbar ist.

10. Abtastsystem nach einem der Ansprüche 1 bis 9, dadurch gekennzeichnet, daß bei der Abtastung der Tonschwingungen von Saiten (23-28) einer Gitarre (20), Harfe, Klavier od. dgl. das Strahlenbündel (35) im wesentlichen rechtwinklig auf die Saiten (23-28) trifft, wobei die Saiten (23-28) im Strahlenbündel (35) hintereinanderliegend angeordnet sind.

11. Abtastsystem nach einem der Ansprüche 1 bis 10, dadurch gekennzeichnet, daß die Strahlungsquelle (30) von einer Lichtquelle mit einer Glühlampe (31) gebildet ist.

12. Abtastsystem nach einem der Ansprüche 1 bis 11, dadurch gekennzeichnet, daß die die Lichtquelle (30) bildende Glühlampe (31) zur Justierung des von einem Lichtbündel gebildeten Strahlenbündels (35) symmetrisch auf die hintereinanderliegenden Saiten (23-28) begrenzt verstellbar ist.

13. Abtastsystem nach einem der Ansprüche 1 bis 12, dadurch gekennzeichnet, daß dem von der Lichtquelle (30) kommenden und zur Sammellinse (36) führenden und dabei die Saiten (23-28) der Gitarre (20) od. dgl. erfassenden Strahlenbündel (35) eine etwa U-förmige Abdeckung (42) mit Aussparungen (43) für die Saiten (23-28) zugeordnet ist.

## Claims

1. System for scanning the vibrations of matter (23-28) and for converting mechanical vibrations in the matter (23-28), particularly the strings of musical instruments, such as guitars (20), harps, pianos or the like, into an electrical voltage pulsating according to the mechanical vibrations of the matter (23-28), comprising a converter (38) which converts to electrical voltage the rays emanating from a radiation source (30), the vibrating matter (23-28) being disposed with one part in the beam of rays (35) striking the converter (38) and producing correspondingly vibrating shadows on the converter (38), characterised in that there are in the beam of rays (35) striking the converter (38) and disposed one after another in the longitudinal direction of the ray beam (35), independently vibratable matter (23-28) which give rise to overlapping shadows on the common converter (38) the vibratable matter (23-28) having in each case a slender part which is smaller than the width of the ray beam (35) disposed in this latter and in that the part of the converter (38) which is partially shaded by the parts of the vibrating matter (23-28) disposed in the ray beam (35) and adapted to be activated by the ray beam (35) has such a form that upon a lateral displacement of the shadows produced by the vibrations, the shaded and the non-shaded parts of that surface of the converter (38) which can be activated vary in their size.

2. Scanning system according to Claim 1, characterised in that the surface of the converter (38) which can be activated by the beam of rays (35) has a circular form.

3. Scanning system according to Claim 1, characterised in that the beam of rays (35) striking the area of the converter (38) which can be activated has a circular cross-section.

4. Scanning system according to one of Claims 1 to 3, characterised in that between the converter (38) and the vibrating matter (23-28) there is a device, preferably in the form of a condenser lens (36) which reduces the ray beam (35) to a smaller cross-sectional area.

5. Scanning system according to one of Claims 1 to 3, characterised in that between the converter (38) and the vibrating matter (23-28) there is a device, preferably in the form of a diverging lens, which brings the ray beam (35) to a larger cross-sectional area.

6. Scanning system according to one of Claims 1 to 5, characterised in that a radiation conductor (37), preferably in the form of a flexible optical fibre (37) is incorporated between the convector (38) and the device (36) which varies the cross-sectional area of the beam of rays (35).

7. Scanning system according to one of Claims 1 to 6, characterised in that the electrical voltage coming from the converter (38) can be processed via a transformer to produce a useful signal.

8. Scanning system according to one of Claims 1 to 7, characterised in that the electrical voltage coming from the converter (38) can be processed via an amplifier to produce an electrical useful signal, preferably in the form of a music signal.

9. Scanning system according to one of Claims 1 to 8, characterised in that the electrical voltage coming from the converter (38) can be conducted via an amplifier to at least one loud speaker.

10. Scanning system according to one of Claims 1 to 9, characterised in that where scanning of audio-oscillations of strings (23-28) of a guitar (20), harp, piano or the like is concerned, the beam of rays (35) strikes the strings (23-28) substantially at a right angle, the strings (23-28) being disposed one behind another in the beam of rays (35).

11. Scanning system according to one of Claims 1 to 10, characterised in that the radiation source (30) is constituted by a light source with an incandescent bulb (31).

12. Scanning system according to one of Claims 1 to 11, characterised in that the incandescent bulb (31) which constitutes the light source (30) is adapted for limited adjustment symmetrically in respect of the serially disposed strings (23-28) in order to adjust the ray beam (35) which is formed by a bundle of light rays.

13. Scanning system according to one of Claims 1 to 12, characterised in that there is associated with the beam of rays (35) emanating from the light source (30) and leading to the condenser lens (36) and in the process detecting the strings (23-28) of the guitar (20) or the like, a substantially U-shaped covering (42) comprising cut-outs (43) for the strings (23-28).

## Revendications

1. Dispositif d'analyse des vibrations de matériaux (23-28), permettant la conversion de vibrations mécaniques des matériaux (23-28), notamment des cordes d'instruments de musique tels que guitares (20), harpes, pianos ou analogues, en une tension électrique pulsée correspondant aux vibrations mécaniques des matériaux (23-28), comportant un convertisseur (38) qui transforme en tension électrique les rayons provenant d'une source de rayonnement (30), le matériau vibrant (23-28) étant disposé en partie dans le faisceau de rayons (35) tombant sur le convertisseur (38) et créant sur le convertisseur (38) des ombres portées vibrant de manière correspondante, caractérisé en ce qu'il est disposé, dans le faisceau de rayons (35) tombant sur le convertisseur (38), plusieurs matériaux (23-28) disposés l'un derrière l'autre suivant la direction longitudinale du faisceau de rayons (35), capables de vibrer indépendamment l'un de l'autre et créant des ombres portées se chevauchant sur le convertisseur commun (38), les matériaux vibrants (23-28) étant disposés chacun dans le faisceau de rayons (35) par une partie mince, plus petite que la largeur du faisceau de rayons (35), et en ce que la partie du convertisseur (38), qui peut être activée par le faisceau de rayons (35) et reçoit partiellement l'ombre portée des parties des matériaux vibrants (23-28) disposées dans le faisceau de rayons (35), a une forme telle que, lors d'un déplacement latéral des ombres portées provoqué par les vibrations, la partie de la surface pouvant être activée du convertisseur (38) qui reçoit l'ombre portée et celle qui n'en reçoit pas varient en grandeur.

2. Dispositif d'analyse suivant la revendication 1, caractérisé en ce que la surface du convertisseur (38) pouvant être activée par le faisceau de rayons (35) possède une forme circulaire.

3. Dispositif d'analyse suivant la revendication 1, caractérisé en ce que le faisceau de rayons (35) tombant sur la surface du convertisseur (38) pouvant être activée possède une section transversale circulaire.

4. Dispositif d'analyse suivant l'une des revendications 1 à 3, caractérisé en ce qu'il est prévu, entre le convertisseur (38) et le matériau vibrant (23-28), un dispositif amenant le faisceau de rayons (35) à une section transversale d'aire plus petite et formé de préférence d'une lentille convergente (36).

5. Dispositif d'analyse suivant l'une des revendications 1 à 3, caractérisé en ce qu'il est prévu, entre le convertisseur (38) et le matériau vibrant (23-28), un dispositif amenant le faisceau de rayons (35) à une section transversale d'aire plus grande et formé de préférence d'une lentille divergente.

6. Dispositif d'analyse suivant l'une des revendications 1 à 5, caractérisé en ce qu'un guide de rayonnement (37), de préférence formé d'une fibre optique souple (37), est monté entre le convertisseur (38) et le dispositif (36) modifiant l'aire de la section transversale du faisceau de rayons (35).

7. Dispositif d'analyse suivant l'une des revendications 1 à 6, caractérisé en ce que la tension électrique provenant du convertisseur (38) peut être rendue disponible sous la forme d'un signal utile à l'aide d'un circuit de transformation.

8. Dispositif d'analyse suivant l'une des revendications 1 à 7, caractérisé en ce que la tension électrique provenant du convertisseur (38) peut être rendue disponible, par l'intermédiaire d'un amplificateur, sous forme d'un signal électrique utile, de préférence formé d'un signal musical.

9. Dispositif d'analyse suivant l'une des revendications 1 à 8, caractérisé en ce que la tension électrique provenant du convertisseur (38) est agencée de façon à pouvoir être envoyée, par l'intermédiaire d'un amplificateur, à au moins un haut-parleur.

10. Dispositif d'analyse suivant l'une des revendications 1 à 9, caractérisé en ce que, lors de l'analyse des vibrations sonores des cordes (23-28) d'une guitare (20), harpe, piano ou analogue, le faisceau de rayons (35) tombe à peu près à angle droit sur les cordes (23-28), les cordes (23-28) étant disposées l'une derrière l'autre dans le faisceau de rayons (35).

11. Dispositif d'analyse suivant l'une des revendications 1 à 10, caractérisé en ce que la source de rayonnement (30) est formée d'une source lumineuse comportant une lampe à incandescence (31).

12. Dispositif d'analyse suivant l'une des revendications 1 à 11, caractérisé en ce que la lampe à incandescence (31) constituant la source lumineuse (30) est réglable de façon limitée d'une manière symétrique par rapport aux cordes (23-28) disposées l'une derrière l'autre, en vue de régler le faisceau de rayons (35) formé par un faisceau lumineux.

13. Dispositif d'analyse suivant l'une des revendications 1 à 12, caractérisé en ce qu'un capot (42) sensiblement en U et comportant des évidements (43) pour les cordes (23-28) est associé au faisceau de rayons (35) provenant de la source lumineuse (30), se dirigeant vers la lentille convergente (36) et enveloppant à cette occasion les cordes (23-28) de la guitare (20) ou analogue.

FIG.1

FIG.2

1

FIG.4

36

FIG.3

30
35
47
47
36
23
24
25
26
27
28

FIG.6

36

30
35
47
47
36
23
24
25
26
27
28

FIG.5

0 110 152

FIG.7

FIG.8

FIG.9

FIG.10